(19) Europäisches Patentamt
European Patent Office
Office européen des brevets

(11) **EP 1 810 216 B1**

(12) **EUROPEAN PATENT SPECIFICATION**

(45) Date of publication and mention
of the grant of the patent:
**28.03.2012 Bulletin 2012/13**

(51) Int Cl.:
***G06K 9/00*** *(2006.01)*     ***G06K 9/64*** *(2006.01)*

(21) Application number: **05771849.6**

(22) Date of filing: **11.08.2005**

(86) International application number:
**PCT/SE2005/001203**

(87) International publication number:
**WO 2006/019350 (23.02.2006 Gazette 2006/08)**

(54) **3D OBJECT RECOGNITION**

3D-OBJEKTERKENNUNG

RECONNAISSANCE D'OBJETS EN 3D

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.08.2004 SE 0402048**
**23.08.2004 US 603266 P**

(43) Date of publication of application:
**25.07.2007 Bulletin 2007/30**

(73) Proprietor: **Apple Inc.**
**Cupertino, CA 95014 (US)**

(72) Inventors:
• **SOLEM, Jan Erik**
**S-211 49 Malmö (SE)**
• **KAHL, Fredrik**
**S-372 94 Listerby (SE)**

(74) Representative: **Lang, Johannes et al**
**Bardehle Pagenberg**
**Prinzregentenplatz 7**
**81675 München (DE)**

(56) References cited:
EP-A1- 1 039 417    WO-A-00/55814
US-A- 6 137 896    US-A1- 2001 020 946

• GRAUMAN K ET AL: "Inferring 3d structure with a statistical image-based shape model" PROCEEDINGS OF THE EIGHT IEEE INTERNATIONAL CONFERENCE ON COMPUTER VISION. (ICCV). NICE, FRANCE, OCT. 13 - 16, 2003, INTERNATIONAL CONFERENCE ON COMPUTER VISION, LOS ALAMITOS, CA : IEEE COMP. SOC, US, vol. VOL. 2 OF 2. CONF. 9, 13 October 2003 (2003-10-13), pages 641-648, XP010662422 ISBN: 0-7695-1950-4
• GRAUMAN K ET AL: "A Bayesian approach to image-based visual hull reconstruction" PROCEEDINGS 2003 IEEE CONFERENCE ON COMPUTER VISION AND PATTERN RECOGNITION. CVPR 2003. MADISON, WI, JUNE 18 - 20, 2003, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 2 OF 2, 18 June 2003 (2003-06-18), pages 187-194, XP010644897 ISBN: 0-7695-1900-8
• BLANZ V ET AL: "Face recognition based on fitting a 3D morphable model" IEEE TRANSACTIONS ON PATTERN ANALYSIS AND MACHINE INTELLIGENCE, IEEE, NEW YORK, NY, US, vol. 25, no. 9, September 2003 (2003-09), pages 1063-1074, XP011100733 ISSN: 0162-8828
• MOGHADDAM B ET AL: "Model-based 3D face capture with shape-from-silhouettes" ANALYSIS AND MODELING OF FACES AND GESTURES, 2003. AMFG 2003. IEEE INTERNATIONAL WORKSHOP ON 17 OCT. 2003, PISCATAWAY, NJ, USA,IEEE, 2003, pages 20-27, XP010664341 ISBN: 0-7695-2010-3

**(Cont. next page)**

• GRAUMAN K.L.: "A Statistical Image-Based Shape Model for Visual Hull Reconstruction and 3D Structure Inference", INTERNET CITATION, [Online] 1 June 2003 (2003-06-01), page COMPLETE, XP007908448, Retrieved from the Internet: URL:http://www.cs.utexas.edu/~grauman/rese arch/thesis/smthesis_kgrauman.pdf>

• LANITIS A. ET AL: "AN AUTOMATIC FACE IDENTIFICATION SYSTEM USING FLEXIBLE APPEARANCE MODELS", PROCEEDINGS OF THE BRITISH MACHINE VISION CONFERENCE, vol. 1, 1 January 1994 (1994-01-01), pages 65-74, XP000884682,

**Description**

*Field of the invention*

The present invention relates to automated object recognition and in particular to automated object recognition of 3D objects using statistical shape information.

*Background of the invention*

There exist extremely reliable methods for personal identification using biometric data such as e.g. fingerprints, retinal patterns or similar unique features of the subject that rely on the cooperation of the subject. Face recognition may be an effective way of identifying a person without the cooperation or knowledge of the person. There are two main general problems for a face recognition system; *identifying* a person, i.e. determine the identity from images, and *verifying* the identity of a person, i.e. to certify that the person is who he/she claims to be. Specific applications are e.g. immigration, ID-cards, passports, computer logon, intranet security, video surveillance and access systems. The present invention aims at increasing the performance and efficiency of such systems using geometric information available through the use of statistical shape models.

In the area of statistical shape models, the invention is related to the Active Shape Models (ASM), introduced by Cootes and Taylor, ([1]: Cootes T.F. and Taylor C.J, Active Shape Model Search using Local Grey-level Models: A Quantitative Evaluation, British Machine Vision Conference, p.639-648, 1993). One distinction is that ASM have been used for inferring 2D shape from 2D observations or 3D shape from 3D observations whereas the invention uses 2D observations, i.e. images, to infer 3D shape. Also the observations are from multiple views (one or more imaging devices), something that is not handled in standard ASM. Cootes and Taylor have a number of patents in the area, the most relevant are (WO02103618A1 - Statistical Model) where parameterisation of 2D or 3D shapes are treated, (WO0135326A1 - Object Class Identification, Verification or Object Image Synthesis) where an object class is identified in images and (WO02097720A1 - Object Identification) in which objects are identified using modified versions of ASM and related techniques. Also related is Cootes et al. ([2]: Cootes T.F., Wheeler G.V, Walker K.N and Taylor C.J., View-based Active Appearance Models, Image and Vision Computing, 20(9-10), p.657-664; 2002.) where multi-view models are used but no explicit or consistent 3D data is contained in the model. There are also methods for deforming a 3D model of the object to fit the 2D projections of the object in the images such as in Blanz and Vetter ([3]: Blanz V. and Vetter T., Face Recognition Based on Fitting a 3D Morphable Model, IEEE Trans. on Pattern Analysis and Machine Intelligence, 25(9), p.1063-1073, 2003.). These methods are very computationally expensive and often require manual intervention. Related patents are US6556196/EP1039417 (Method and apparatus for the processing of images) which describes a method for morphing a 3D model so that it will be a 3D representation of the object in the image by minimizing the projection error in the image.

One common problem for image based recognition is detecting the 2D shape of the object in the image, i.e. finding the relevant image region. Recent methods for detecting objects in images usually involve scanning the whole image at different scales for object specific image patterns and then using a classifier to decide if the region is relevant or not. The latest developments suggest the use of Support Vector Machines (SVM) for this task. A key element is the extraction of image features, i.e. parts of the image such as corners, edges and other interest points. This is usually done using correlation based schemes using templates or edge based methods using image gradients. For an overview of methods for face detection and feature extraction, cf. Zhao and Chellappa ([4]: Zhao W., Chellappa R., Rosenfeld A and Phillips P.J, Face Recognition: A Literature Survey, Technical report CAR-TR-948, 2000.) and the references therein. In [4] a review of current image based methods for face recognition is also presented.

When using image based methods for identification and verification there are two major problems, *illumination variation* and *pose variation.* Illumination variation will affect all correlation based methods where parts of images are compared since the pixel values vary with changing illumination. Also specular reflections can give rise to high changes in pixel intensity. Pose variation occurs since the projection in the image can change dramatically as the object rotates. These two problems have been documented in many face recognition systems and are unavoidable when the images are acquired in uncontrolled environments. Most of the known methods fail to handle these problems robustly.

The illumination problem is handled by the invention since no image correlation or comparison of image parts is performed. Instead features such as corners which are robust to intensity changes are computed, which make the shape reconstruction, to a large extent, insensitive to illumination and specular reflections. The invention handles the pose problem by using any number of images with different pose for training the statistical model. Any subset of the images, as few as a single image, can then be used to infer the 3D shape of the object.

The article entitled "Inferring 3D structure with a Statistical Image-based Shape Model" by Grauman K et al. (Proceedings of the Eight IEEE International Congerence on Computer Vision, Nice, France, Oct. 13-16, 2003, vol. 2, pages 641-648, XP010662422, ISBN:0-7695-1950-4) describes an image-based approach to infer 3D structure parameters using a probabilistic "shape+ structure" model. The 3D shape of a class of objects is represented by sets of contours from silhouette views simultaneously observed from multiple calibrated cameras. Bayesian reconstructions of new shapes are then estimated using a prior density constructed with a mixture model and probabilistic principal components analysis. The shape model is augmented to incorporate structural features of interest; novel examples with missing structure parameters are then reconstructed to obtain estimates of these parameters. Model matching and parameter inference are done entirely in the image domain and require no explicit 3D construction. The shape model enables accurate estimation of structure despite segmentation errors or missing views in the input silhouettes, and works even with only a single input view. Using a dataset of thousands of pedestrian images generated from a synthetic model, the 3D locations of I9 joints on the body based on observed silhouette contours from real images can be accurately inferred.

### *Summary of the invention*

The invention consists of a statistical model of the shape variations in a class of objects relating the two-dimensional (2D) projection in images to the three-dimensional (3D) shape of the object and the use of the 3D shape information for identification or verification of the object. Furthermore, the present invention relates to an image processing device or system for implementing such a method. The process is fully automatic and may be used e.g. for biometric identification from face images or identification of objects in for instance airport security X-ray images. The recovered 3D shape is the most probable shape consistent with the 2D projections, i.e. the images. The statistical model needs a bank of data, denoted training data, where the 3D positions of the image features are known, in order to learn the parameters of the model. Such data sampling can be done using e.g. binocular or multi-view stereo or range scanners. Once the model parameters are learned, the 3D shape can be computed using one or several images. The 3D shape is then used, by means of the presented invention together with the 2D image data, to identify or verify the object as a particular instance of the object class, e.g. the face belonging to a certain individual. A positive (or negative) identification initiate proper action by means of the presented innovation.

**[0009]**    - In an embodiment of the invention a method for object recognition of a three dimensional, 3D, object (607), comprises the steps of: obtaining at least one two dimensional, 2D, representation (606) of said object; detecting image features in said obtained 2D representation (606); inferring a sparse 3D shape corresponding to the image features using a latent vector representation of said sparse 3D shape and using a statistical multi-view shape model; characterised by further comprising the steps of extending the sparse 3D shape to a dense 3D shape by fitting a surface to said sparse 3D shape using a learned statistical shape model consisting of a complete mean surface of the object in order to regularize said surface shape in a manner specific for an object class; comparing the dense 3D shape to 3D reference shapes (605) previously obtained; and thus identifying an individual object of the object class.

Still in the method, the sparse 3D shape may be inferred from 2D features.

In another aspect of the method according to the present invention, the object class may contain non-rigid objects and the statistical shape model may be learned using 2D and 3D data specific for possible deformations of the objects in the non-rigid object class.

The method may further comprise the step of identifying an individual object of an object class or aiding in the identification of an individual object using the dense 3D shape.

The method may yet further comprise the step of verifying the identity of an individual object of an object class or aiding in the verification of the identity of an individual object using the dense 3D shape.

In the method the object may be one or several of: a human face, a human body, inner organ(s) of a human body, blood vessel, animal, inner organs of an animal, a tumor, manufactured product(s) from an industrial process, a vehicle, an aircraft, a ship, military object(s).

In the method the 3D reference shapes may be stored in at least one of a non-volatile memory, database server, and personal identification card.

In another embodiment of the present invention a device (400) for object recognition of a three dimensional, 3D, object (607), comprising: means for obtaining (404) at least one two dimensional, 2D, representation of said object (607); means for detecting (401) image features in said obtained 2D representation; means for inferring a sparse 3D shape corresponding to the image features using a latent vector representation of said sparse 3D shape and using a statistical multi-view shape model; characterised by further comprising means for extending the sparse 3D shape to a dense 3D shape by fitting a surface to said sparse 3D shape using a learned statistical shape model consisting of a complete mean surface of the object in order to regularize said surface shape in a manner specific for an object class; comparing the dense 3D shape to 3D reference shapes previously obtained, thus identifying an individual object of the object class.

In the device the sparse 3D shape may be inferred from 2D features.

In the device the object class may contain non-rigid objects and the statistical shape model may be learned using 2D and 3D data specific for possible deformations of the objects in the non-rigid object class.

The device may further comprise means for identifying an individual object of an object class or aiding in the identification of an individual object using the dense 3D shape.

The device may still further comprise means for verifying the identity of an individual object of an object class or aiding in the verification of the identity of an individual object using the dense 3D shape.

In the device the object may be one or several of: a human face, a human body, inner organ(s) of a human body, blood vessel, animal, inner organs of an animal, a tumor, manufactured product(s) from an industrial process, a vehicle, an aircraft, a ship, military object(s).

In the device the dense 3D shapes of blood vessels or organs recovered from 2D projections, e.g. using X-ray imaging may be used for navigating steerable catheters or aiding physicians by displaying the dense 3D shape.

The dense 3D shapes of facial features may be used in the device to identify or to verify an identity of an individual in an access control system or security system, resulting in an acceptance or rejection of the individual.

The device may further comprise an interface for communicating with a personal identification card wherein the 3D reference shapes are stored.

- In another embodiment of the present invention a computer program stored in a computer readable storage medium (402) comprising a plurality of instructions that when executed by a computational unit (901) cause the computational unit to perform the method of any one of claims 1 to 6.

- In another embodiment of the present invention a system for object recognition of a three dimensional, 3D, object, comprising: a device (400) according to claim 7; and means for responding (604) to a result from said means for comparison

The system may further comprise means for identifying and/or verifying an individual object of an object class or aiding in the identification and/or verification of the individual object using the recovered 3D shape.

In the system the 3D reference shapes may be stored in at least one of a non-volatile memory, database server, and personal identification card.

### Brief description of the drawings

In the following the invention will be described in a non-limiting way and in more detail with reference to exemplary embodiments illustrated in the enclosed drawings, in which:

Fig. 1 illustrates a two-step procedure for recovering 3D data from an input image.

Fig. 2 illustrates a process of surface fitting to a recovered 3D shape.

Fig. 3 is a schematic block diagram of a device according to the present invention.

Fig. 4 illustrates a schematic block diagram of the steps of a method according to the present invention.

Fig. 5 is a schematic illustration of a system according to the present invention.

### Detailed description of the invention

The invention consists of an image processing system for automatic recovery of 3D shape from images of objects belonging to a certain class. This 3D reconstruction is done by establishing a statistical shape model, denoted the feature model, that relates the 2D image features, e.g. interest points or curves, to their corresponding 3D positions. Such a model is learned, i.e. the model parameters are estimated, from training data where the 2D-3D correspondence is known. This learning phase may be done using any appropriate system for obtaining such 2D-3D correspondence, including, but not limited to binocular or multi-view image acquisition systems, range scanners or similar setups. In this process the object of interest is measured and a reference model of the object is obtained which may be used in subsequent image analysis as will be described below.

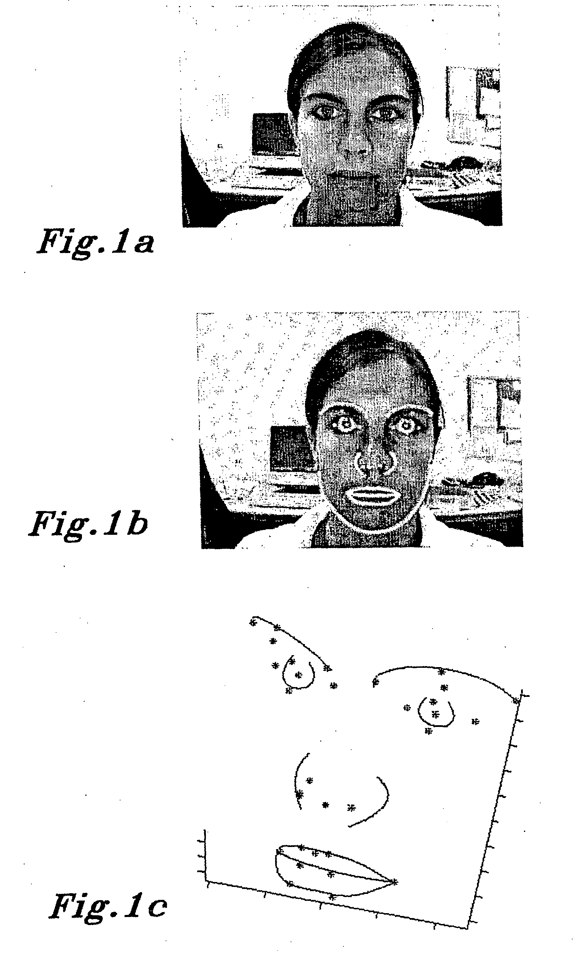

Given an input image, the process of recovering the 3D shape is a two-step procedure. First the image features such as points, curves and contours are found in the images e.g. using techniques such as e.g. ASM [1] or gradient based methods or classifiers such as SVM. Then the 3D shape is inferred using the learned feature model. This is illustrated in Figure 1. Fig 1a illustrates an image of a face to be analysed, Fig. 1b illustrates the detection of object features to be used in the analysis and shape information process, and Fig. 1c illustrates the inferred 3D shape to be used in the recognition process.

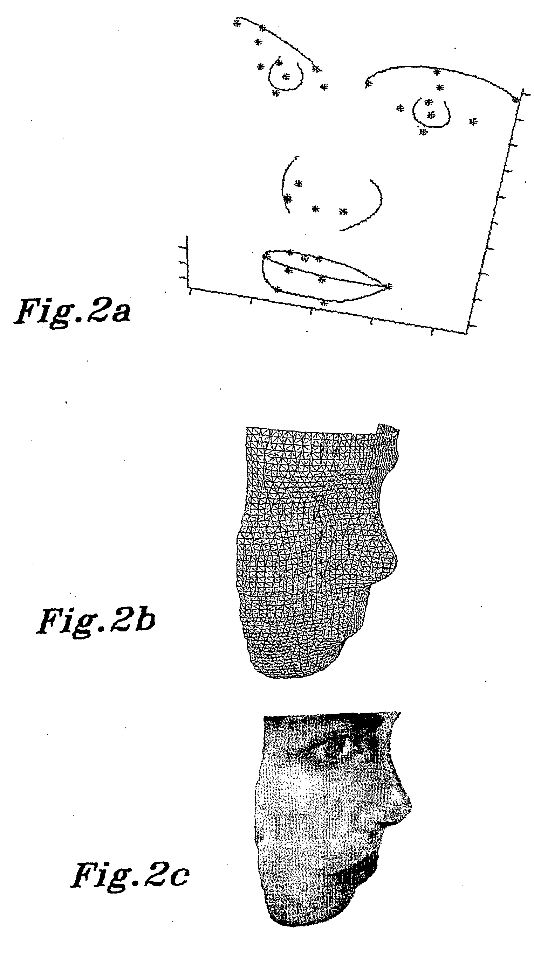

There is also the option of extending the 3D shape representation from curves and points to a full surface model by fitting a surface to the 3D data. This is illustrated in Figure 2, where Fig. 2a illustrates the inferred 3D shape, 2b illustrates a fitted surface to the 3D data, and Fig. 2c illustrates a 3D rendered surface model of the fitted surface.

*The Feature Model*

Suppose we have a number of elements in a $d$-dimensional vector $\mathbf{t}$, for example, a collection of 3D points in some normalized coordinate system. The starting point for the derivation of the model is that the elements in $\mathbf{t}$ can be related to some latent vector $\mathbf{u}$ of dimension $q$ where the relationship is linear:

$$\mathbf{t} = W\mathbf{u} + \mu \qquad\qquad (1)$$

where $W$ is a matrix of size $d \times q$ and $\mu$ is a d-vector allowing for non-zero mean. Once the model parameters $W$ and $\mu$ have been learned from examples, they are kept fix. However, our measurements take place in the images, which usually is a non-linear function of the 3D features according to the projection model for the relevant imaging device.

Denote the projection function with $f: R^d \to R^e$, projecting all 3D features to 2D image features, for one or more images. Also, we need to change coordinate system of the 3D features to suit the actual projection function. Denote this mapping by $T: R^d \to R^d$. Typically, $T$ is a similarity transformation of the world coordinate system. Thus, $f(T(\mathbf{t}))$ will project all normalised 3D data to all images. Finally, a noise model needs to be specified. We assume that the image measurements are independent and normally distributed, likewise, the latent variables are assumed to be Gaussian with unit variance $\mathbf{u} \sim N(0,I)$. Thus, in summary:

$$\mathbf{t}_{2D} = f(T(\mathbf{t})) + \varepsilon = f(T(W\mathbf{u} + \mu)) + \varepsilon \qquad\qquad (2)$$

where $\varepsilon \sim N(0, (\sigma^2 I))$ for some scalar $\sigma$. The model is related to PPCA, cf. Tipping and Bishop ([5]: Tipping M.E., Bishop C.M., Probabilistic Principal Component Analysis, Phil. Trans. Royal Soc. London B, 61(3), p.611-622, 1999.), but there are also differences due to the non-linearity of $f(.)$. Before the model can be used, its parameters need to be estimated from training data. Given that it is a probabilistic model, this is best done with maximum likelihood (ML). Suppose we are given $n$ examples $\left\{\mathbf{t}_{2D,i}\right\}_{i=1}^{n}$, the ML estimate for $W$ and $\mu$ is obtained by minimizing:

$$\sum_{i=1}^{n}\left(\frac{1}{\sigma^2}\|\mathbf{t}_{2D} - f(T_i(\mathbf{u}_i))\|^2 + \|u_i\|^2\right) \qquad\qquad (3)$$

over all unknowns. The standard deviation $\sigma$ is estimated a priori from the data. Once the model parameters W and $\mu$ have been learned from examples, they are kept fix. In practice, to minimize (3) we alternatively optimize over $(W,\mu)$ and $\left\{\mathbf{u}_i\right\}_{i=1}^{n}$ using gradient descent. Initial estimates can be obtained by intersecting 3D structure from each set of images and then applying PPCA algorithms for the linear part. The normalization $T_i(.)$ is chosen such that each normalized 3D sample has zero mean and unit variance.

There are three different types of geometric features embedded in the model.

**Points:** A 3D point which is visible in $m>1$ images will be represented in the vector $\mathbf{t}$ with its 3D coordinates (X,Y,Z). For points visible in only one image, $m=1$, no depth information is available, and such points are represented similarly to apparent contour points.

**Curves:** A curve will be represented in the model by a number of points along the curve. In the training of the model, it is important to parameterize each 3D curve such that each point on the curve approximately corresponds to the same point on the corresponding curve in the other examples.

**Apparent contours:** As for curves, we sample the apparent contours (in the images). However, there is no 3D information available for the apparent contours as they are view-dependent. A simple way is to treat points of the apparent contours as 3D points with a constant, approximate (but crude) depth estimate.

### Finding Image Features

In the on-line event of a new input sample, we want to automatically find the latent variables **u** and, in turn, compute estimates of the 3D features **t.** The missing component in the model is the relationship between 2D image features and the underlying grey-level (or colour) values at these pixels. There are several ways of solving this, e.g. using an ASM (denoted the *grey-level model*) or detector based approaches.

### The Grey-level Model

Again, we adopt a linear model (PPCA). Using the same notation as in (1), but now with the subscript *gl* for grey-level, the model can be written

$$\mathbf{t}_{gl} = W_{gl}\dot{\mathbf{u}}_{gl} + \mu_{gl} + \varepsilon_{gl} \tag{4}$$

where $\mathbf{t}_{gl}$ is a vector containing the grey-level values of all the 2D image features and $\varepsilon_{gl}$ is Gaussian noise in the measurements. In the training phase, each data sample of grey-levels is normalized by subtracting the mean and scaling to unit variance. The ML-estimate of $W_{gl}$ and $\mu_{gl}$ is computed with the EM-algorithm [5].

### Detector-based Methods

Image interest points and curves can be found by analyzing the image gradient using e.g. the Harris corner-detector. Also, specially designed filters can be used as detectors for image features. By designing the filters so that the response for certain local image structures are high, image features can be found using a 2D convolution.

### Classification Methods

Using classifiers such as SVM, image regions can be classified as corresponding to a certain feature or not. By combining a series of such classifiers, one for each image feature (points, curves, contours etc.) and scanning the image at all appropriate scales the image features can be extracted. Examples can be e.g. an eye detector for facial images.

### Deformable Models

Using a deformable model such as the Active Contour Models, also called snakes, of a certain image feature is very common in the field of image segmentation. Usually the features are curves. The process is iterative and tries to optimize an energy function. An initial curve is deformed gradually to the best fit according to an energy function that may contain terms regulating the smoothness of the fit as well as other properties of the curve.

### Surface Fitting to the 3D Data

Once the 3D data is recovered, a surface model can be fitted to the 3D structure. This might be desirable in case the two-step procedure above only produces a sparse set of features in 3D space such as e.g. points and space curves. Even if these cues are characteristic for a particular sample (or individual), it is often not enough to infer a complete surface model, and in particular, this is difficult in the regions where the features are sparse. Therefore, a 3D surface model consisting of the complete mean surface is introduced. This will serve as a domain-specific, i.e. specific for a certain class of objects, regularizer. This approach requires that there is dense 3D shape information available for some training examples in the training data of the object class obtained from e.g. laser scans or in the case of medical images from e.g. MRI or computer tomography. From these dense 3D shapes, a model can be built separate from the feature model above. This means that, given recovered 3D shape, in the form of points and curves, from the feature model, the best dense shape according to the recovered 3D shape can be computed. This dense shape information can be used to improve surface fitting.

To illustrate with an example, consider the case of the object class being faces. The model is then learned using e.g. points, curves and contours in images together with the true 3D shape corresponding to these features obtained from e.g. multi-view stereo techniques. A second model is then created and learned using e.g. laser scans of faces, giving a set of face surfaces. This second model can be used to find the most probable (or at least highly probable) mean face surface (according to the second model) corresponding to the features or the recovered 3D shape. A surface can then be fitted to the 3D shape with the additional condition that where there is no recovered 3D shape, the surface should resemble the most probable mean face surface.

As a second example, consider the case of the object class being a particular blood vessel, e.g. the aorta. The model is then learned using e.g. curves and contours in images together with the true 3D shape obtained as e.g. a 3D MRI image. From the true 3D shapes a second model is learned comprising of the surface of the aorta. Then the most probable (or highly probable) aorta surface can be recovered from the image features or from the 3D shape recovered by the primary shape model.

The method provides the most probable or an at least highly probable 3D shape, in many applications this is sufficient and the identification and/or verification process is not necessary for the final application.

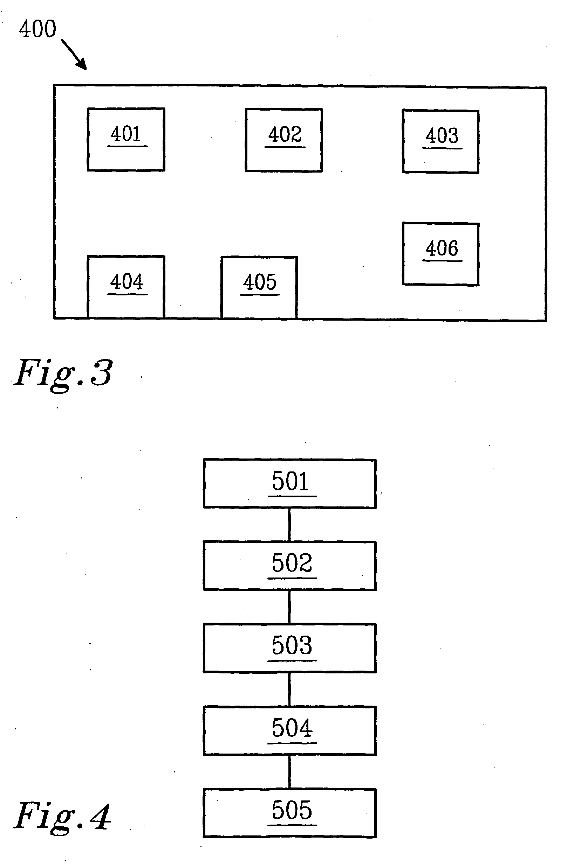

We have now described the underlying method used for verification and/or identification purposes. Referring now to Fig. 3 a description of a device 400 implementing the preferred method according to the present invention will be given. Such a device 400 may be any appropriate type of computational device such as, but not limited to, a personal computer (PC), workstation, embedded computer, or stand alone device with a computational unit 401, such as a microprocessor, DSP (digital signal processor), FPGA (field programmable gate array), or ASIC (application specific integrated circuit). The device 400 has some input means 404 for obtaining images for analysis and final identification and/or verification. The input means 404 may be of any suitable communication interface depending on image type and include, but is not limited to, USB (universal serial bus), frame grabber, Ethernet, or Firewire. Image data is transferred to a computational unit 401 wherein software for execution of the above described method according to the present invention resides. The device 400 may further comprise some volatile or non-volatile memory 402 containing information related to a reference material for comparison and/or analysis purposes, e.g. known 2D-3D relationships of objects of interest. The device 400 may still further comprise communication means for communicating with other computational devices over e.g. a network protocol (such as Ethernet or similar protocols) and output means 405 for outputting results to for instance a screen for convenient viewing or to a control device (not shown) for controlling an external process wherein the objects of interest are part of. Such processes may include, but is not limited to, industrial production processes where objects may be selected or deselected depending on the result from the identification and/or verification method according to the present invention, security processes again for selection or deselection purposes in for instance airport security systems for examination of the contents of suitcases, bags or other luggage equipment, or medical applications where the recovered 3D shape may be used e.g. for navigation of instruments or medical devices.

The method for object recognition according to the present invention may be illustrated using Fig. 4. The method may comprise the following steps:

> 1. Obtaining at least one image of an object to be identified and/or verified (501);
> 2. Detecting image features, such as curves, points, and apparent contours (502).
> 3. Analysing the obtained image and inferring 3D shape corresponding to the image features, using a statistical shape model (503);
> 4. Comparing the analysis with reference images previously obtained and comparing the 3D shape in a sparse or dense form with reference 3D shape previously obtained (504); and
> 5. Responding to an output from the comparison process (505).

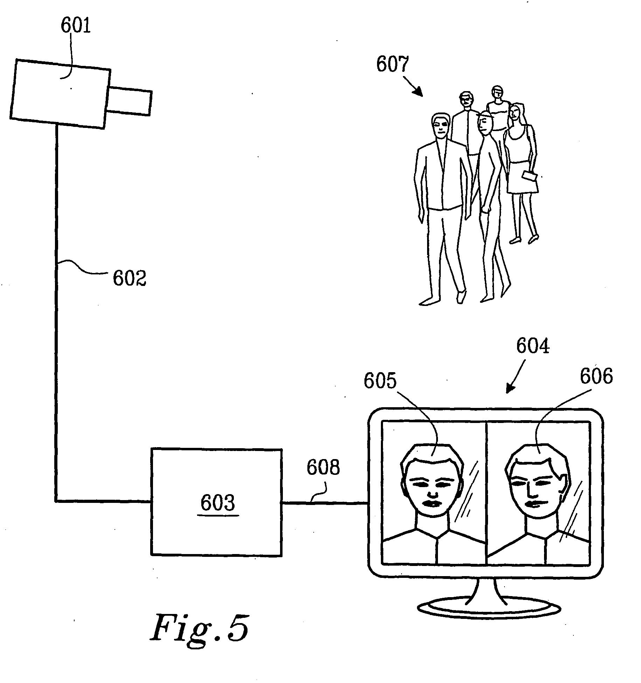

In another embodiment of the present invention a system is used for obtaining images, analyzing, and responding to results from the identification and/or verification process, as may be seen in Fig. 5. Such a system may include at least one image acquisition device 601, a computational device 400, 603 as described above, and some type of responsive equipment such as e.g. the industrial process equipment or the security process equipment described above. At least one image acquisition device 601 is used for acquiring one or more images which are transferred 602 to a computational device 603 for analysis and verification and/or identification. The result from this process is transmitted to a control system or display system 604. In the case of a face detection system at least one image of a person is obtained, for instance the face of the person, and the image or images are transmitted to the computational device 603, using any suitable communication means 602 (wired or wireless), for analysis and comparison of the acquired image or images with data obtained from reference measurements for example with known 2D-3D relationships; however, comparison may be made between an inferred 3D shape with a stored 3D reference data or between a 2D surface model with a stored 2D reference surface model. The result may be made available through for instance a display unit 604 and may for illustrative purposes be displayed with both a reference image 605 and the obtained image 606 or images rendered from the recovered 3D shape as shown in Fig. 5. It should be appreciated by the person skilled in the art that the image acquisition system and/or display/control system may be incorporated with the computational device forming an integral unit and that the result may be displayed in any suitable manner and is not limited to the above described example. Instead of transferring the result to a display unit 604 it may be used in any suitable control process for controlling e.g. an alarm, an entrance system, control gate, toll gate, and so on.

Some of the benefits the present invention contributes to the technical field may be illustrated with the following list:

- Any number of images, even as few as a single image, may be used to automatically recover the 3D shape of an object in the object class.
- A statistical multi-view model that represents 2D *and* 3D data consistently.
- The process is automatic and computationally efficient.
- The process is robust to illumination and specular reflections which is a problem for 3D reconstruction methods based on image correlation or photo-consistency.
- Surfaces can be fitted to the 3D structure using domain specific regularizers learned from statistical shape models.

The flexibility of the present invention may be illustrated with the following list:

- The statistical shape model may be used for any class of objects and the projection of these objects in images.
- The approach may be used for any kind of imaging device (camera, X-ray, multi-spectral, thermal, etc.).
- The invention may be used with any number of imaging devices (one or more).
- The invention includes the possibility of combining many different techniques for establishing 2D to 3D correspondence (image acquisition systems, range scanners, stereo image systems, multi-view stereo image systems, X-ray etc.)
- The invention includes the possibility of using different techniques, such as ASM, gradient based methods or deformable models, for finding the image features.
- If the object class contains non-rigid objects, the invention includes the possibility to establish 2D to 3D models for different deformations of the object (e.g. different facial expressions).
- The invention includes the possibility of using a statistical shape model for surface fitting to the recovered 3D shape.

The reference representations of objects may be stored in several different locations and with different types of systems, such as, but not limited to, locally on some non-volatile memory in a device utilizing the object recognition according to the present invention, in a centralized server, e.g. a database server, or a personal identification card containing a reference representation of an object such as a person and this identification card may be used in for instance an access system. Communication between an object recognition system and a reference representation storage system may be utilized with different types of security levels and/or schemes, such as RADIUS, DIAMETER, SSL, SSH, or any other encrypted communication system as understood by the person skilled in the art.

Possible application areas for the above described invention range from object identification and verification in industrial processes, determining and/or identifying objects for security reasons, object recognition for military purposes, e.g. automatic determination of military vehicles, military ships, aircrafts, and so on, face recognition systems for many different applications, e.g. biometrics, information security, law enforcement, smart cards, access control and so on.

The above mentioned and described embodiments are only given as examples and should not be limiting to the present invention. Other solutions, uses, objectives, and functions within the scope of the invention as claimed in the below described patent claims should be apparent for the person skilled in the art.

**Claims**

1. A method for object recognition of a three dimensional, 3D, object (607), comprising the steps of:

   - obtaining at least one two dimensional, 2D, representation (606) of said object;
   - detecting image features in said obtained 2D representation (606);
   - inferring a sparse 3D shape corresponding to the image features using a latent vector representation of said sparse 3D shape and using a statistical multi-view shape model;
   **characterised by** further comprising the steps of
   - extending the sparse 3D shape to a dense 3D shape by fitting a surface to said sparse 3D shape using a learned statistical shape model consisting of a complete mean surface of the object in order to regularize said surface shape in a manner specific for an object class;
   - comparing the dense 3D shape to 3D reference shapes (605) previously obtained; and thus
   - identifying an individual object of the object class.

2. The method according to claim 1, wherein said sparse 3D shape is inferred from 2D features.

3. The method according to claims 1 to 2, wherein said object class contains non-rigid objects and said statistical shape model is learned using 2D and 3D data specific for possible deformations of the objects in said non-rigid object class.

4. The method according to any of claims 1 - 3, further comprising the step of verifying the identity of an individual object of an object class or aiding in the verification of the identity of an individual object using said dense 3D shape.

5. The method according to claim 1 - 4, wherein said object (607) may be one or several of: a human face, a human body, inner organ(s) of a human body, blood vessel, animal, inner organs of an animal, a tumor, manufactured product(s) from an industrial process,
a vehicle, an aircraft, a ship, military object(s).

6. The method according to claim 1, wherein said 3D reference shapes (605) are stored in at least one of a non-volatile memory, database server, and personal identification card.

7. A device (400) for object recognition of a three dimensional, 3D, object (607), comprising:

- means for obtaining (404) at least one two dimensional, 2D, representation of said object (607);
- means for detecting (401) image features in said obtained 2D representation;
- means for inferring a sparse 3D shape corresponding to the image features using a latent vector representation of said sparse 3D shape and using a statistical multi-view shape model;
**characterised by** further comprising means for
- extending the sparse 3D shape to a dense 3D shape by fitting a surface to said sparse 3D shape using a learned statistical shape model consisting of a complete mean surface of the object in order to regularize said surface shape in a manner specific for an object class;
- comparing the dense 3D shape to 3D reference shapes previously obtained, thus

identifying an individual object of the object class.

8. The device (400) according to claim 7, wherein said sparse 3D shape is inferred from 2D features.

9. The device (400) according to claims 7-8, wherein said object class contains non-rigid objects and said statistical shape model is learned using 2D and 3D data specific for possible deformations of the objects in said non-rigid object class.

10. The device (400) according to any of claims 7-9, further comprising means for verifying the identity of an individual object of an object class or aiding in the verification of the identity of an individual object using said dense 3D shape.

11. The device (400) according to claim 7-10, wherein said object may be one or several of: a human face, a human body, inner organ(s) of a human body, blood vessel, animal, inner organs of an animal, a tumor, manufactured product(s) from an industrial process, a vehicle, an aircraft, a ship, military object(s).

12. The device (400) according to claim 11, wherein said dense 3D shapes of blood vessels or organs recovered from 2D projections, e.g., using X-ray imaging, are used for navigating steerable catheters or aiding physicians by displaying said dense 3D shape.

13. The device (400) according to claim 11, wherein said dense 3D shapes of facial features are used to identify or to verify an identity of an individual in an access control system or security system, resulting in an acceptance or rejection of said individual.

14. The device (400) according to claim 8, further comprising an interface for communicating with a personal identification card wherein said 3D reference shapes are stored.

15. A computer program stored in a computer readable storage medium (402) comprising a plurality of instructions that when executed by a computational unit (901) cause the computational unit to perform the method of any one of claims 1 to 6.

16. A system for object recognition of a three dimensional, 3D, object, comprising:

- a device (400) according to claim 7; and
- means for responding (604) to a result from said means for comparison.

17. The system according to claim 16, further comprising means for identifying and/or verifying an individual object of an object class or aiding in said identification and/or verification of said individual object using said dense 3D shape.

18. The system according to claim 16, wherein said 3D reference shapes are stored in at least one of a non-volatile memory, database server, and personal identification card.

**Patentansprüche**

1. Verfahren zur Objekterkennung eines dreidimensionalen, 3D, Objekts (607), umfassend die Schritte:

    - Erhalten von zumindest einer zweidimensionalen, 2D, Darstellung (606) des Objekts;
    - Detektieren der Bildmerkmale in der erhaltenen 2D-Darstellung (606);
    - Schlussfolgern einer spärlichen 3D-Form, welche mit den Bildmerkmalen korrespondiert, indem eine latente VektorDarstellung der spärlichen 3D-Form benutzt wird und ein statistisches Mehrfachansichten-Formmodell benutzt wird; **dadurch gekennzeichnet, dass** weiterhin die Schritte umfasst sind:
    - Erweitern der spärlichen 3D-Form zu einer dichten 3D-Form durch Anpassen einer Oberfläche an die spärliche 3D-Form, unter Verwendung eines erlernten statistischen Formmodells, welches aus einer vollständigen mittleren Oberfläche des Objekts besteht, um die Oberflächenform in einer für eine Objektklasse spezifischen Art festzulegen;

    Vergleichen der dichten 3D-Form mit zuvor erhaltenen 3D-Referenzformen (605); und dadurch Identifizieren eines individuellen Objekts der Objektklasse.

2. Verfahren gemäß Anspruch 1, wobei die spärliche 3D-Form aus 2D-Merkmalen geschlussfolgert wird.

3. Verfahren gemäß Ansprüchen 1 bis 2, wobei die Objektklasse nicht-starre Objekte umfasst und das statistische Formmodell durch Benutzen von 2D- und 3D-Daten gelernt wird, welche spezifisch für mögliche Deformationen der Objekte in der nicht-starren Objektklasse sind.

4. Verfahren gemäß irgendeinem der Ansprüche 1 bis 3, weiterhin umfassend den Schritt des Verifizierens der Identität eines individuellen Objekts einer Objektklasse oder des Helfens bei der Verifikation der Identität eines individuellen Objekts, wobei die dichte 3D-Form benutzt wird.

5. Verfahren gemäß Ansprüchen 1 bis 4, wobei das Objekt (607) eines oder mehrere von: einem menschlichen Gesicht, einem menschlichen Körper, einem oder mehreren inneren Organen eines menschlichen Körpers, einem Blutgefäß, einem Tier, inneren Organen eines Tieres, einem Tumor, einem oder mehreren mit einem Industrieverfahren hergestellten Produkten, einem Fahrzeug, einem Flugzeug, einem Schiff, einem oder mehreren militärischen Objekten sein kann.

6. Verfahren gemäß Anspruch 1, wobei die 3D-Referenz-Formen (605) in mindestens einem von einem nicht-flüchtigen Speicher, Datenbank-Server und persönlicher Identifikationskarte gespeichert werden.

7. Vorrichtung (400) zur Objekterkennung eines dreidimensionalen, 3D, Objektes (607), umfassend:

    - Mittel zum Erhalten (404) von mindestens einer zweidimensionalen, 2D, Darstellung des Objekts (607);
    - Mittel zum Detektieren (401) von Bildmerkmalen in der erhaltenen 2D-Darstellung;
    - Mittel zum Schlussfolgern einer spärlichen 3D-Form, welche mit den Bildmerkmalen korrespondiert, unter Verwendung einer latenten Vektordarstellung der spärlichen 3D-Form, und durch Nutzen eines statistischen Mehrfachansichten-Formmodells; **gekennzeichnet dadurch, dass** es weiterhin Mittel umfasst zum:
    - Erweitern der spärlichen 3D-Form zu einer dichten 3D-Form durch Anpassen einer Oberfläche an die spärliche 3D-Form, ein erlerntes statistisches Formmodell nutzend, welches aus einer kompletten mittleren Oberfläche des Objekts besteht, um die Oberflächenform in einer für eine Objektklasse spezifischen Art festzulegen;
    - Vergleichen der dichten 3D-Form mit zuvor erhaltenen 3D-Referenz-Formen; dadurch

Identifizieren eines individuellen Objekts der Objektklasse.

8. Vorrichtung (400) gemäß Anspruch 7, wobei die spärliche 3D-Form aus 2D-Merkmalen geschlussfolgert wird.

9. Vorrichtung (400) gemäß Ansprüchen 7 bis 8, wobei die Objektklasse nicht-starre Objekte umfasst und das statistische Formmodell gelernt wird, indem 2D- und 3D-Daten genutzt werden, welche spezifisch für mögliche Deformationen der Objekte in der nicht-starren Objektklasse sind.

10. Vorrichtung (400) gemäß irgendeinem der Ansprüche 7 bis 9, weiterhin umfassend Mittel zur Verifizierung der Identität eines individuellen Objekts einer Objektklasse oder Helfen bei der Verifikation der Identität eines individuellen Objekts, indem die dichte 3D-Form benutzt wird.

11. Vorrichtung (400) gemäß Ansprüchen 7 bis 10, wobei das Objekt eines oder mehrere von: einem menschlichen Gesicht, einem menschlichen Körper, einem oder mehreren inneren Organen eines menschlichen Körpers, einem Blutgefäß, einem Tier, inneren Organen eines Tieres, einem Tumor, einem oder mehreren mit einem Industrieverfahren hergestellten Produkten, einem Fahrzeug, einem Flugzeug, einem Schiff, einem oder mehreren militärischen Objekten sein kann.

12. Vorrichtung (400) gemäß Anspruch 11, wobei die dichten 3D-Formen der Blutgefäße oder Organe, welche aus 2D-Projektionen gewonnen wurden, z.B. unter Verwendung von Röntgenbildgebung, zum Navigieren lenkbarer Katheter oder zum Unterstützen der Ärzte durch Anzeigen der dichten 3D-Form verwendet werden.

13. Vorrichtung (400) gemäß Anspruch 11, wobei die dichten 3D-Formen der Gesichtsmerkmale genutzt werden, um eine Identität eines Individuums in einem Zugangskontrollsystem oder Sicherheitssystem zu identifizieren oder zu verifizieren, resultierend in einem Zulassen oder Zurückweisen des Individuums.

14. Vorrichtung (400) gemäß Anspruch 8, weiterhin umfassend eine Schnittstelle zum Kommunizieren mit einer persönlichen Identifikationskarte, auf der die 3D-Referenz-Formen gespeichert sind.

15. In einem computerlesbaren Speichermedium (402) gespeichertes Computerprogramm, umfassend eine Vielzahl von Instruktionen, welche, wenn durch ein Rechnerelement (901) ausgeführt, das Rechnerelement veranlassen, die Methode irgendeines der Ansprüche 1 bis 6 auszuführen.

16. System zur Objekterkennung eines dreidimensionalen, 3D, Objekts, umfassend:

   - eine Vorrichtung (400) gemäß Anspruch 7; und
   - Mittel zum Antworten (604) auf ein Ergebnis der Mittel zum Vergleichen.

17. System gemäß Anspruch 16, weiterhin umfassend Mittel zum Identifizieren und/oder Verifizieren eines individuellen Objekts einer Objektklasse oder Helfen bei der Identifikation und/oder Verifikation des individuellen Objekts, unter Verwendung der dichten 3D-Form.

18. System gemäß Anspruch 16, wobei die 3D-Referenz-Formen in mindestens einem von einem nicht-flüchtigen Speicher, Datenbank-Server, und persönlicher Identifikationskarte gespeichert sind.

**Revendications**

1. Un procédé de reconnaissance d'objet d'un objet tridimensionnel, 3D, (607), comprenant les étapes suivantes :

   - obtention d'au moins une représentation bidimensionnelle, 2D, (606) dudit objet ;
   - détection de singularités d'image dans ladite représentation 2D obtenue (606) ;
   - inférence d'une forme 3D clairsemée correspondant aux singularités d'image en utilisant une représentation vectorielle latente de ladite forme 3D clairsemée et utilisation d'un modèle de forme multivue statistique,

   **caractérisé en ce qu'**il comprend en outre les étapes suivantes :

   - extension de la forme 3D clairsemée en une forme 3D dense par adaptation d'une surface à ladite forme 3D clairsemée en utilisant un modèle de forme statistique appris consistant en une surface moyenne complète de l'objet afin de régulariser ladite forme de surface d'une manière spécifique à une classe d'objets ;
- comparaison de la forme 3D dense à des formes 3D de référence (605) précédemment obtenues ; et ainsi
- identification d'un objet individuel de la classe d'objets.

2. Le procédé de la revendication 1, dans lequel ladite forme 3D clairsemée est inférée de singularités 2D.

3. Le procédé des revendications 1 à 2, dans lequel ladite classe d'objets contient des objets non rigides et ledit modèle de forme statistique est appris par utilisation de données 2D et 3D spécifiques à des déformations possibles des objets dans ladite classe d'objets non rigides.

4. Le procédé de l'une des revendications 1 à 3, comprenant en outre l'étape de vérification de l'identité d'un objet individuel d'une classe d'objets ou d'assistance à la vérification de l'identité d'un objet individuel par utilisation de ladite forme 3D dense.

5. Le procédé de l'une des revendications 1 à 4, dans lequel ledit objet (607) peut être un ou plusieurs d'entre : un visage humain, un corps humain, un ou des organes internes d'un corps humain, un vaisseau sanguin, un animal, des organes internes d'un animal, une tumeur, un ou des produits manufacturés provenant d'un processus industriel, un véhicule, un aéronef, un navire, un ou des objets militaires.

6. Le procédé de la revendication 1, dans lequel lesdites formes 3D de référence (605) sont stockées dans au moins l'une d'entre une mémoire non volatile, un serveur de base de données et une carte d'identification personnelle.

7. Un dispositif (400) de reconnaissance d'objet d'un objet tridimensionnel, 3D, (607), comprenant :

- des moyens d'obtention (404) d'au moins une représentation bidimensionnelle, 2D, dudit objet (607) ;
- des moyens de détection (401) de singularités d'image dans ladite représentation 2D obtenue ;
- des moyens d'inférence d'une forme 3D clairsemée correspondant aux singularités d'image en utilisant une représentation vectorielle latente de ladite forme 3D clairsemée et utilisation d'un modèle de forme multivue statistique,

**caractérisé en ce qu'**il comprend en outre des moyens :

- d'extension de la forme 3D clairsemée en une forme 3D dense par adaptation d'une surface à ladite forme 3D clairsemée en utilisant un modèle de forme statistique appris consistant en une surface moyenne complète de l'objet afin de régulariser ladite forme de surface d'une manière spécifique à une classe d'objets ;
- de comparaison de la forme 3D dense à des formes 3D de référence précédemment obtenues ; et ainsi
- d'identification d'un objet individuel de la classe d'objets.

8. Le dispositif (400) de la revendication 7, dans lequel ladite forme 3D clairsemée est inférée de singularités 2D.

9. Le dispositif (400) des revendications 7 à 8, dans lequel ladite classe d'objets contient des objets non rigides et ledit modèle de forme statistique est appris par utilisation de données 2D et 3D spécifiques à des déformations possibles des objets dans ladite classe d'objets non rigides.

10. Le dispositif (400) de l'une des revendications 7 à 9, comprenant en outre des moyens de vérification de l'identité d'un objet individuel d'une classe d'objets ou d'assistance à la vérification de l'identité d'un objet individuel par utilisation de ladite forme 3D dense.

11. Le dispositif (400) de l'une des revendications 7 à 10, dans lequel ledit objet peut être un ou plusieurs d'entre : un visage humain, un corps humain, un ou des organes internes d'un corps humain, un vaisseau sanguin, un animal, des organes internes d'un animal, une tumeur, un ou des produits manufacturés provenant d'un processus industriel, un véhicule, un aéronef, un navire, un ou des objets militaires.

12. Le dispositif (400) de la revendication 11, dans lequel lesdites formes 3D denses de vaisseaux sanguins ou d'organes récupérées à partir de projections 2D, par exemple au moyen d'une imagerie aux rayons X, sont utilisées pour faire naviguer des cathéters guidables ou pour assister des médecins par affichage de ladite forme 3D dense.

**13.** Le dispositif (400) de la revendication 11, dans lequel lesdites formes 3D denses de singularités du visage sont utilisées pour identifier ou pour vérifier une identité d'un individu dans un système de contrôle d'accès ou un système de sécurité, conduisant à une acceptation ou un refus dudit individu.

**14.** Le dispositif (400) de la revendication 8, comprenant en outre une interface pour communiquer avec une carte d'identification personnelle dans laquelle sont mémorisées lesdites formes de référence 3D.

**15.** Un programme informatique mémorisé sur un support de stockage lisible par ordinateur (402) comprenant une pluralité d'instructions qui lorsqu'elles sont exécutées par une unité de calcul (901) font en sorte que l'unité de calcul mette en oeuvre le procédé de l'une des revendications 1 à 6.

**16.** Un système de reconnaissance d'objets d'un objet tridimensionnel, 3D, comprenant:

- un dispositif (400) selon la revendication 7; et
- des moyens pour répondre (604) à un résultat issu desdits moyens de comparaison.

**17.** Le système de la revendication 16, comprenant en outre des moyens d'identification et/ou de vérification d'un objet individuel d'une classe d'objets ou d'assistance à ladite identification et/ou vérification dudit objet individuel par utilisation de ladite forme 3D dense.

**18.** Le système de la revendication 16, dans lequel lesdites formes de référence 3D sont mémorisées dans au moins l'un d'entre une mémoire non volatile, un serveur de base de données et une carte d'identification personnelle.

Fig.1a

Fig.1b

Fig.1c

EP 1 810 216 B1

Fig.2a

Fig.2b

Fig.2c

16

400

401 402 403

406

404 405

*Fig.3*

501

502

503

504

*Fig.4* 505

*Fig.5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02103618 A1
- WO 0135326 A1
- WO 02097720 A1
- US 6556196 B
- EP 1039417 A

### Non-patent literature cited in the description

- **COOTES T.F. ; TAYLOR C.J.** Active Shape Model Search using Local Grey-level Models: A Quantitative Evaluation. *British Machine Vision Conference,* 1993, 639-648
- **COOTES T.F. ; WHEELER G.V ; WALKER K.N ; TAYLOR C.J.** View-based Active Appearance Models. *Image and Vision Computing,* 2002, vol. 20 (9-10), 657-664
- **BLANZ V. ; VETTER T.** Face Recognition Based on Fitting a 3D Morphable Model. *IEEE Trans. on Pattern Analysis and Machine Intelligence,* 2003, vol. 25 (9), 1063-1073
- **ZHAO W. ; CHELLAPPA R. ; ROSENFELD A ; PHILLIPS P.J.** Face Recognition: A Literature Survey. *Technical report CAR-TR-948,* 2000
- **GRAUMAN K et al.** Inferring 3D structure with a Statistical Image-based Shape Model. *Proceedings of the Eight IEEE International Congerence on Computer Vision,* 13 October 2003, vol. 2, ISBN 0-7695-1950-4, 641-648
- **TIPPING M.E. ; BISHOP C.M.** Probabilistic Principal Component Analysis. *Phil. Trans. Royal Soc. London B,* 1999, vol. 61 (3), 611-622